(19) Europäisches Patentamt
European Patent Office
Office européen des brevets

(11) Publication number: **0 094 779 B1**

(12) # EUROPEAN PATENT SPECIFICATION

(45) Date of publication of patent specification: **24.08.88**

(51) Int. Cl.$^4$: **A 01 N 43/90**, A 01 N 25/02

(21) Application number: **83302612.3**

(22) Date of filing: **09.05.83**

(54) **Synergistic avermectin combination.**

(30) Priority: **10.05.82 US 376362**

(43) Date of publication of application:
**23.11.83 Bulletin 83/47**

(45) Publication of the grant of the patent:
**24.08.88 Bulletin 88/34**

(84) Designated Contracting States:
**AT BE CH DE FR GB IT LI LU NL SE**

(56) References cited:
**GB-A-2 056 986**
**US-A-3 997 322**
**US-A-4 310 519**

(73) Proprietor: **MERCK & CO. INC.**
**126, East Lincoln Avenue P.O. Box 2000**
**Rahway New Jersey 07065-0900 (US)**

(72) Inventor: **Dybas, Richard A.**
**437 Rivercrest Drive**
**Piscataway New Jersey 08854 (US)**

(74) Representative: **Crampton, Keith John Allen et al**
**D YOUNG & CO 10 Staple Inn**
**London WC1V 7RD (GB)**

**The file contains technical information submitted after the application was filed and not included in this specification**

EP 0 094 779 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The avermectins (formerly identified as C-076 compounds) are a family of macrocyclic lactones that are highly effective against a broad range of pests that infest and are an annoyance to plants and animals. The avermectins are active against ectoparasites and endoparasites of domestic animals, including pets and animals grown for food, also man. In addition, the compounds are very effective against arthropod pests, which affect plants while in storage or while growing, either in the aerial portion of the plant or from the soil in which they grow.

The avermectin compounds are isolated from the fermentation broth of a microorganism, *Streptomyces avermitilis.* The isolation and purification of such compounds is described in U.S. Patent US—A—4,310,519. Several derivatives of the avermectin compounds have been prepared, specifically the 22,23-dihydro derivatives and the monosaccharide derivatives.

The present invention is based on the discovery that a combination of certain avermectin compounds, including certain derivatives, e.g. some of those mentioned above, with an agricultural spray oil is significantly more effective at a lower dose of avermectin and over a longer period of time than either component alone.

Compounds that are related to the avermectins, but which have significant chemical differences, and the milbemycins, which have also been found to be active miticides and insecticides. In tests, the ovicidal activity of such compounds has been enhanced by the addition of machine oil. However, such activity has been demonstrated to be significantly different from synergistic activity against the motile (active) stages of agricultural insect and mite pests.

The avermectin compounds that form part of the synergistic combination of the present invention have the following structural formula:

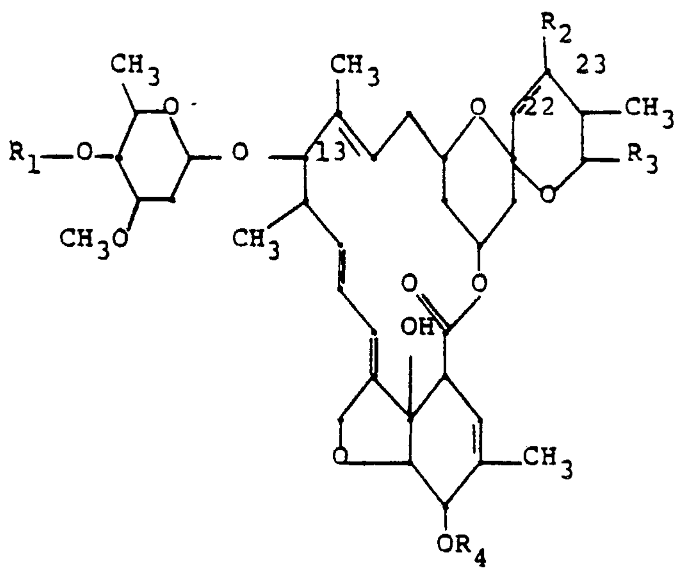

where the broken line indicates either a single or a double bond at the 22,23-position;

$R_1$ is hydrogen or

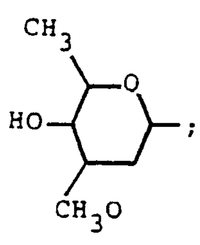

$R_2$ is hydrogen or hydroxy provided that $R_2$ is present only when the broken line indicates a single bond;

$R_3$ is *sec*-butyl or isopropyl; and

$R_4$ is hydrogen or methyl.

In accordance with the present invention, a formulation containing a synergistic combination useful against motile stages of arthropods infecting plants comprises one or more avermectin compounds having the above formula, together with 0.03 to 0.5% v/v, based on the total formulation, of an agricultural spray oil that is a highly refined hydrocarbon oil containing at least 92% unsulfonated residues or is a vegetable seed oil or mixture thereof.

The avermectin compounds isolated from the *Streptomyces avermitilis* fermentation broth are obtained as described in the above-mentioned US—A—4,310,519. Such compounds are those of the above formula in which $R_1$ is the sugar residue (which is α-L-oleandrose); the broken line indicates a single or double bond; $R_2$ is hydroxy but is present only when the broken line indicates a single bond; $R_3$ is sec-butyl or isopropyl; and $R_4$ is hydrogen or methyl. The compounds are named using a combination of letters and numbers which coordinate with the structural variations of the substituents. The following table defines the avermectin natural product compounds:

| Avermectin | $R_1$/22,23 | $R_3$ | $R_4$ |
|---|---|---|---|
| A1a | Double bond | *sec*-butyl | $—CH_3$ |
| A1b | Double bond | isopropyl | $—CH_3$ |
| A2a | —OH | *sec*-butyl | $—CH_3$ |
| A2b | —OH | isopropyl | $—CH_3$ |
| B1a | Double bond | *sec*-butyl | —H |
| B1b | Double bond | isopropyl | —H |
| B2a | —OH | *sec*-butyl | —H |
| B2B | —OH | isopropyl | —H |

Derivatives of the above 8 avermectin compounds can be prepared to form other compounds which are effective in the combination of the invention. In the A1a, A1b, B1a and B1b compounds (the "1-series" of compounds) the 22,23-double bond can be selectively reduced to a single bond to form the compounds where $R_2$ is hydrogen. The catalyst selective in reducing the 22,23-double bond while not affecting the other 4 double bonds is Wilkinson's homogeneous catalyst, which is exemplified by triphenyl phosphine rhodium chloride. The procedures for making such 22,23-dihydro avermectin compounds and fully described in U.S. Patent US—A—4,199,569.

In addition, the outer α-L-oleandrose group can be selectively hydrolysed to prepare the avermectin monosaccharide compounds; i.e., the compounds in which $R_1$ is hydrogen. Hydrolysis is most readily and most selectively effected by treating the avermectin compounds with sulfuric acid in isopropanol. The procedures for preparing such monosaccharide compounds are fully described in U.S. Patent US—A—4,206,205.

The agricultural spray oils that form the second component of the combination are highly refined hydrocarbon oils, specially processed to remove sulfonated residues which may be toxic to plants. In accordance with the invention, oil with at least 92% unsulfonated residues is used. The oils are narrow distillation fractions and are characterized by a narrow range of physical properties. In particular, they are characterized by their viscosity, measured in seconds. One of the oils useful in the combination is a narrow fraction yielding a viscosity test of 60 seconds. This commonly is called "60 second oil" and is also known by the tradenames of Sunspray 6N, Orchex, and FMC NR 415, and similar 60 second oils from Superior and Volk. This particular oil is also characterized in having a boiling point of 213°C (415°F). Another oil used in the present combination is a similar oil however, having a viscosity test of 70 seconds. This is called "70 second oil" and is also known by the tradenames of Sunspray 7N, FMC NR 440, and similar 70 second oils from Superior and Volk. This oil is also characterized in having a boiling point of 227°C or 440°F.

Other typical characterizations of the instant agricultural spray oils are described in the literature. See, for example, Canadian Patent CA—A—964,482.

The agricultural spray oils may also be a vegetable seed oil or a mixture of vegetable seed oils, which, as they are known in the agricultural industry, are crop seed oils produced from the particular crop from which their name is derived. Included in the vegetable oils suitable for the compositions of the present invention are cotton seed oil, rapeseed, peanut oil, sunflower oil, linseed oil, safflower oil, soybean oil, corn oil, olive oil and blends of the above oils such as cotton seed oil plus soybean oil; cotton seed oil plus peanut oil; cotton seed oil plus olive oil; corn oil plus linseed oil; corn oil plus soybean oil; as well as blends of any two or more of the above disclosed vegetable oils. In addition, the instant agricultural spray oil may be a mixture of a vegetable oil or oils and the above described hydrocarbon oils.

These oils have been used alone to combat mite infestations in plants however the concentrations used were generally in the order of 1 to 2%. In addition, such oil formulations at the 1 to 2% concentration were used in combination with insecticides. It is known that when it is used under these conditions, the oil physically smothers the eggs, thus preventing their maturing into the motile stages of development. That is, the oil acts as an ovicide.

In the present invention the oil is used in combination with the avermectin compound in concentrations less than those used in the prior art. Furthermore, much less of the avermectin compound need be used. The combination of the agricultural spray oil and the avermectin provides effective protection against the motile stages of the mites and insects while the use of higher concentrations of the oil provides ovicidal effects. In the formulation of the invention, the agricultural spray oil is used in concentrations of from 0.03 to 0.5% on a volume-to-volume basis of the final formulation. Preferably the concentration of the agricultural spray oil is from 0.06 to 0.5%, particularly about 0.25%. The lower concentrations are preferred when, because of the nature of a particular plant, or because of the sensitivity of a particular stage of growth of a plant, a spray containing higher concentrations cannot be used because of phytotoxicity.

The avermectin compounds are preferably used in the synergistic combination at concentrations of from 0.03 to 8 parts per million (ppm), particularly 0.25 to 3 ppm, and especially from 1 to 3 ppm. These dilute solutions can provide optimum field control of the mite populations.

The combination of the avermectin with the agricultural spray oil provides the unexpected benefits of being able to use less of each of the ingredients as well as providing a longer duration of action.

It is also advantageous to use less of each of the ingredients since the avermectins are very expensive and the agricultural spray oils, under certain circumstances can be phytotoxic, or at least contraindicated. The surprising observation that the instant combination has a considerably prolonged duration of action is a great benefit in that costly reapplications and reinfestations are avoided.

The avermectin and the agricultural spray oil combination is prepared using a solvent solution or emulsion of the avermectin compound or compounds, the agricultural spray oil, a surfactant and sufficient water to dilute the mixture to the desired concentration.

The surfactants which may be used to emulsify the oil and the avermectin in the aqueous formulations are any of the non-phytotoxic surfactants, which are customarily used in preparing formulations for use on agricultural crops.

The surfactants or surface active agents particularly suited for use in the compositions of the present invention are ionic or nonionic surface active compounds generally well known to the art. Surface active agents are suitable as a class for use according to the present invention. The nature of surface active agents is well known and such agents generally have an oleophilic portion of the molecule, usually of hydrocarbon nature, and another polar portion of the molecule, which may be provided by various functional groups such as hydroxyl, sulfate, carboxyl, carbonyl, amino, nitro, amide, ether, sulfonate, phosphate or phosphite. Examples of suitable classes of surface active agents are alkali metal salts of fatty acids, alkali metal salts of sulfated fatty acids, fatty acid glycerides, sulfonated or sulfated fatty acid esters or amides, alkali metal sulfates, alkali metal alkyl sulfonates, alkali metal aryl sulfonates, alkali metal alkyl lauryl sulfonates, quaternary ammonium halides, alkali metal salts of alkylated naphthalenesulfonic acid, polyethylene sorbitol esters of fatty acids, fatty acid amides of alkanol amines, condensation products of ethylene oxide and polyalkylene glycols, sorbitan esters, alkyl substituted phosphoric acids and alkali metal salts of alkyl phenol sulfonates. Examples of individual surface active agents are given for example in Kirk et al., ENCYCLOPEDIA OF CHEMICAL TECHNOLOGY, Volume 13, pages 515—517 (1954).

The ingredients are combined using formulation techniques well known to those skilled in the art.

The synergistic combination of the invention may be used against agricultural arthropod pests to provide effective protection from the motile stages of such mites and insects while the plant is growing or while the crops from such plants are in storage. In particular, this combination is effective against mites of the order *acarina* such as the two spotted spider mite (*Tetranychus urticae*), the citrus red mite (*Panonychus citri*) and the citrus rust mite (*Phyllocoptruta oleivora*). Insects of the order *homoptera, coleoptera* and *lepidoptera* are likewise susceptible to this combination, in particular the black bean aphid (*Aphis fabae*), Colorado potato beetle (*Leptinotarsa decemlineata*), Mexican bean beetle (*Epilachna varivestis*); and cabbage looper (*Trichoplusia ni*).

In using the compounds of this invention, the individual avermectin components may be prepared and used in that form. Alternatively, mixtures of two or more of the individual avermectin components may be used, as well as mixtures with the parent avermectin compounds, other avermectin compounds, or other active compounds not related to the avermectins and the compounds of this invention.

In the isolation of the avermectin compounds, which serve as starting materials for the instant processes, from the fermentation broth, the various avermectin compounds will be found to have been prepared in unequal amounts. In particular an "a" series compound will be prepared in a higher proportion than the corresponding "b" series compound. The weight ratio of "a" series to the corresponding "b" series is about 75:25 to 99:1. The differences between the "a" series and "b" series is constant throughout the avermectin compounds and consists of a sec-butyl group and an iso-propyl group respectively at the 25-position. This difference, of course, does not interfere with any of the present reactions. In particular, it may not be necessary to separate the "b" components from the related "a" component. Separation of these closely related compounds is generally not practised since the "b" compound is present only in a very small percent by weight, and the structural difference has negligible effect on the reaction processes and biological activities.

In particular, for the preferred B1 and A1 compounds, it has been found that the starting materials for the compounds of this invention are very often prepared in a ratio of about 80% avermectin B1a and A1a

and 20% avermectin B1b or A1b. Thus the preferred composition of this invention is one which contains at least 80% of the "a" component and not more than 20% of the "b" component.

Example 1

Effects of Avermectin B1a/B1b and Agricultural Spray Oil on Citrus Rust Mite on Oranges

In a test of the effectiveness of avermectin compounds and agricultural spray oil (Sunspray 6N) used alone and in combination against the citrus rust mite on Marrs oranges, the following results were observed after spraying the orange trees to runoff with the listed concentration of the ingredients.

The data are given in Table I in terms of the mean numbers of rust mites observed per sq cm on the indicated number of days following the spraying. The agricultural spray oil was reapplied on day 53. The last column "% Russet" indicates the percent of fruit that were downgraded due to the effects of the mites.

TABLE I

Mean No. rust mite/sq. cm. (on fruit)

| Treatment | oz./100 gal | Pre-treatment | day 13 | day 26 | day 52 | day 67 | day 77 | day 96 | % Russet |
|---|---|---|---|---|---|---|---|---|---|
| Avermectin Bla/Blb | 0.04 | 1.52 | 0.00 | 0.00 | 0.14 | 4.56 | 5.78 | 15.13 | 35 |
| Avermectin Bla/Blb | 0.08 | 0.32 | 0.00 | 0.01 | 0.88 | 2.43 | 3.47 | 3.78 | 16 |
| Avermectin Bla/Blb & Agricultural Spray Oil | 0.04+ 0.25% | 0.30 | 0.04 | 0.00 | 0.06 | 0.50 | 0.00 | 0.24 | 5 |
| Agricultural Spray Oil | 0.25% | 0.72 | 0.00 | 0.01 | 1.62 | 1.57 | 1.35 | 0.78 | 31 |
| Control | ---- | 0.68 | 10.41 | 19.85 | 51.88 | 24.58 | 23.05 | 5.31 | 51 |

Example 2

Effects of Avermectin B1a/B1b and Agriculture Spray Oil on Citrus Rust Mite on Grapefruit

The procedure followed in Example 1 is repeated on grapefruit trees except that both the 0.04 oz/100 gal treatment of avermectin and the agricultural spray oil were reapplied on day 53. The results are given in Table II.

TABLE II

Mean No. rust mite/sq. cm. (on fruit)

| Treatment | oz./100 gal | Pre-treatment | day 13 | day 26 | day 52 | day 67 | day 77 | day 96 | % Russet |
|---|---|---|---|---|---|---|---|---|---|
| Avermectin Bla/Blb | 0.04 | 7.84 | 4.31 | 4.97 | 12.85 | 0.01 | 2.03 | 1.35 | 23 |
| Avermectin Bla/Blb | 0.08 | 4.36 | 0.19 | 0.15 | 3.48 | 1.42 | 1.22 | 1.55 | 22 |
| Avermectin Bla/Blb & Agricultural Spray Oil | 0.04+ 0.25% | 3.08 | 0.10 | 0.61 | 1.28 | 0.62 | 0.02 | 0.01 | 8 |
| Agricultural Spray Oil | 0.25% | 1.92 | 8.72 | 14.39 | 30.34 | 0.76 | 1.90 | 1.35 | 40 |
| Control | ---- | 9.28 | 55.05 | 30.24 | 11.68 | 2.00 | .47 | 0.13 | 70 |

In analyzing the result of Examples 1 and 2 it is noted that the 2 concentrations of the avermectin applied without oil achieved only moderate control of the mites although the lower dosage in the grapefruit had to be reapplied because of increasing mite population levels. The agricultural spray oil, also applied twice, achieved a level of control better than the control group, but not very effective considering the high percent of russet downgrading of the fruit. The combination of a low dose of the avermectin and the agricultural spray oil applied once achieved in the orange test a mite count 60 times better than the low dose and 15 times better than higher dose at the end of the test. Percent russet was only 5% for the combination and 16 and 35% for the high and low doses respectively, 31% for the oil alone and 51% for the control. For the grapefruit, compared with the avermectin results, the combination had 135 and 155 times less mites. The percent russet was likewise improved at 8% for the combination 22 and 23% for avermectin alone, 40% for the oil alone and 70% for the control.

## Example 3

### Effects of Avermectin and Agricultural Spray Oil Against Motile Stages of the Two-Spotted Spider Mite on Bean Plants in the Laboratory

In this test various concentrations of avermectin B1a/B1b alone and in combination with two different levels of agricultural spray oil were tested. In addition, the agricultural spray oil alone was tested at 2 different concentrations. Table III shows the results where avermectin B1a/B1b was sprayed onto the plants containing a mixed mite population of adults and nymphs. Mortality counts were taken 5 and 11 days post-spray. Table IV represents a similar test however the infestation was applied 7 days after the plant was sprayed to measure residual control. Table V is a compilation of the data of Tables III and IV and gives the estimated effective dosage for avermectin B1a/B1b alone and with the agricultural spray oil.

## TABLE III

Contact miticidal efficacy of Avermectin Bla/Blb Agricultural Spray Oil combinations

| TREATMENT | RATE (ppm) Avermectin Bla/Blb | 5-DAYS POST-SPRAY ADULTS Dead | Alive | % Cont. | NYMPHS Dead | Alive | % Cont. | 11 DAYS POST-SPRAY ADULTS Dead | Alive | % Cont. | NYMPHS Dead | Alive | % Cont. | LARVE Dead | Alive | % Cont. |
|---|---|---|---|---|---|---|---|---|---|---|---|---|---|---|---|---|
| Avermectin | .25 | 131 | 0 | 100 | 9 | 0 | 100 | 56 | 109 | 34 | 89 | 0 | 100 | 2 | 1 | 67 |
| Bla/Blb | .125 | 83 | 2 | 98 | 23 | 1 | 96 | 51 | 131 | 28 | 55 | | 97 | 6 | 0 | 100 |
| | .063 | 126 | 32 | 80 | 23 | 0 | 100 | NC | | 0 | NC | | 0 | NC | | 0 |
| | .031 | 66 | 16 | 81 | 11 | 0 | 100 | NC | | 0 | NC | | 0 | NC | | 0 |
| | .015 | 56 | 40 | 58 | 3 | 0 | 100 | NC | | 0 | NC | | 0 | NC | | 0 |
| Avermectin | .1 | 138 | 0 | 100 | 8 | 0 | 100 | 113 | 2 | 98 | 17 | 1 | 95 | 188 | 0 | 100 |
| Bla/Blb with | .05 | 79 | 0 | 100 | 10 | 0 | 100 | 75 | 0 | 100 | 26 | 0 | 100 | 100 | 0 | 100 |
| 0.125% Agricul. | .025 | 175 | 0 | 100 | 9 | 0 | 100 | 106 | 17 | 86 | 71 | 1 | 99 | 76 | 0 | 100 |
| Spray Oil | .0125 | 160 | 0 | 100 | 10 | 0 | 100 | 143 | 13 | 92 | 77 | 10 | 89 | 50 | 0 | 100 |
| | .0063 | 124 | 1 | 99 | 11 | 0 | 100 | 224 | 41 | 85 | 40 | 27 | 60 | 64 | 0 | 100 |
| Avermectin | .1 | 125 | 1 | 99 | 19 | 0 | 100 | 117 | 4 | 97 | 37 | 1 | 97 | 14 | 2 | 88 |
| Bla/Blb with | .05 | 223 | 0 | 100 | 17 | 1 | 95 | 174 | 1 | 100 | 50 | 2 | 96 | 6 | 0 | 100 |
| 0.031% Agricul. | .025 | 196 | 0 | 100 | 9 | 0 | 100 | 123 | 7 | 95 | 36 | 12 | 75 | 40 | 0 | 100 |
| Spray Oil | .0125 | 139 | 0 | 100 | 15 | 0 | 100 | 111 | 46 | 71 | 15 | 47 | 24 | 0 | 0 | |
| | .0063 | 216 | 4 | 98 | 9 | 4 | 69 | 120 | 32 | 79 | 32 | 49 | 40 | 2 | 0 | 100 |
| Controls: 0% | 0 | 0 | 162 | 0 | 0 | 6 | 0 | 0 | 96 | 0 | 0 | 43 | 0 | 0 | 75 | 0 |
| Agricul. .03% | 0 | 2 | 99 | 2 | 0 | 2 | 0 | NC | | 0 | NC | | 0 | NC | | 0 |
| Spray Oil .125% | 0 | 0 | 85 | 0 | 0 | 6 | 0 | NC | | 0 | NC | | 0 | NC | | 0 |

NC = no control

TABLE IV

**Residual miticidal efficacy of Avermectin Bla/Blb Agricultural Spray Oil combinations**

| TREATMENT | RATE (ppm) Avermectin Bla/Blb | 4-DAYS POST-INFESTATION (11 days post-spray) | | | | | | 13 DAYS POST-INFESTATION (20 days post-spray) | | | | | | | | |
|---|---|---|---|---|---|---|---|---|---|---|---|---|---|---|---|---|
| | | ADULTS | | | NYMPHS | | | ADULTS | | | NYMPHS | | | LARVE | | |
| | | Dead | Alive | % Cont. | Dead | Alive | % Cont. | Dead | Alive | % Cont. | Dead | Alive | % Cont. | Dead | Alive | % Cont. |
| Avermectin | 2.0 | 140 | 0 | 100 | 16 | 0 | 100 | 60 | 0 | 100 | 11 | 0 | 100 | 4 | 0 | 100 |
| Bla/Blb | 1.0 | 76 | 2 | 98 | 9 | 1 | 90 | 51 | 0 | 100 | 12 | 0 | 100 | 6 | 0 | 100 |
| | 0.5 | 39 | 0 | 100 | 12 | 0 | 100 | 40 | 0 | 100 | 16 | 0 | 100 | 21 | 0 | 100 |
| | 0.25 | 55 | 4 | 93 | 2 | 2 | 50 | 13 | 163 | 7 | 2 | 36 | 5 | 1 | 4 | 20 |
| Avermectin | 0.125 | 193 | 0 | 100 | 25 | 0 | 100 | 60 | 0 | 100 | 19 | 0 | 100 | 7 | 0 | 100 |
| Bla/Blb | 0.063 | 86 | 4 | 96 | 35 | 0 | 100 | 43 | 0 | 100 | 21 | 0 | 100 | 7 | 0 | 100 |
| with 0.125% | 0.031 | 75 | 4 | 95 | 24 | 3 | 89 | 73 | 20 | 78 | 15 | 10 | 60 | 4 | 0 | 100 |
| Agricultural Spray Oil | 0.015 | 49 | 49 | 50 | 8 | 14 | 36 | 25 | 140 | 15 | 4 | 41 | 9 | 0 | 5 | 0 |
| Avermectin | 0.125 | 83 | 2 | 98 | 14 | 7 | 67 | 43 | 33 | 57 | 13 | 13 | 50 | 0 | 0 | 0 |
| Bla/Blb | 0.063 | 91 | 2 | 98 | 6 | 2 | 75 | 34 | 37 | 48 | 8 | 7 | 53 | 1 | 0 | 0 |
| with 0.031% | 0.031 | 58 | 11 | 84 | 10 | 18 | 36 | NC | | 0 | NC | | 0 | NC | | 0 |
| Agricultural Spray Oil | 0.015 | 17 | 26 | 40 | 5 | 16 | 24 | NC | | 0 | NC | | 0 | NC | | 0 |
| Controls: 0% | 0 | 4 | 77 | 5 | 0 | 4 | 0 | NC | | 0 | NC | | 0 | NC | | 0 |
| Agricul. .03% | 0 | 3 | 58 | 5 | 0 | 9 | 0 | NC | | 0 | NC | | 0 | NC | | 0 |
| Spray Oil .125% | 0 | 0 | 86 | 0 | 0 | 5 | 0 | NC | | 0 | NC | | 0 | NC | | 0 |

NC = no control

TABLE V

Estimated effective dosages of Avermectin B1a/B1b combinations.

| | $ED_{90}s$ | | | |
|---|---|---|---|---|
| | CONTACT TEST | | RESIDUAL TEST | |
| | 5 Days Post-Spray | 11 Days Post-Spray | 4 Days Post-Infestation | 13 Days Post-Infestation |
| | | ADULTS | | |
| Avermectin B1a/B1b | .1 | .25 | .25 | .4 |
| Avermectin B1a/B1b with .125% Agricultural Spray Oil | .0063 | .025 | .03 | .05 |
| Avermectin B1a/B1b with .031% Agricultural Spray Oil | .0063 | .02 | .03 | .125 |
| | | NYMPHS | | |
| Avermectin B1a/B1b | .015 | .1 | .4 | .2 |
| Avermectin B1a/B1b with .125% Agricultural Spray Oil | .0063 | .0125 | .031 | .125 |
| Avermectin B1a/B1b with .031% Agricultural Spray Oil | .01 | .04 | .125 | .125 |
| | | LARVAE | | |
| Avermectin B1a/B1b | -- | .1 | -- | .4 |
| Avermectin B1a/B1b with 125% Agricultural Spray Oil | -- | .0063 | -- | .02 |
| Avermectin B1a/B1b with .031% Agricultural Spray Oil | -- | .0063 | -- | .125 |

In the above tests it is noted that the combination treatment is more effective than either treatment alone such that lower concentrations of the avermectin are effective for longer periods of time. In addition, since in the avermectin and combination treated plants many mites are recovered, although most are dead, it is apparent that the effect is not as an ovicide which would be expected with treatment with an oil. The presence of motile mites demonstrates that the eggs were not killed. However, the high mortality observed against the adults, nymphs and larvae populations also demonstrates that the treatment is highly effective against the motile stages of the mite.

Example 4

Effects of Avermectins and Agricultural Spray Oil on the Two-spotted Spider Mite on Bean Plants

Bean plants were treated with various concentrations of avermectin B1a/B1b, Sunspray 6N agricultural spray oil, and combinations thereof, and 7 days thereafter were challenged with a mixed population of the two-spotted spider mite. Table VI gives the results of observations made 6 and 12 days after the challenge. A significant improvement in activity is noted when the combination is applied to the plant.

TABLE VI

EVALUATION OF AVERMECTIN B1a/B1b WITH AGRICULTURAL SPRAY OIL

TWO-SPOTTED SPIDER MITE

| Avermectin B1a/B1b PPM | Sunspray 6N Oil % | % Mortality: 6-Day Reading Adults | 6-Day Reading Larvae | 12-Day Reading Adults | 12-Day Reading Nymphs | 12-Day Reading Larvae |
|---|---|---|---|---|---|---|
| 1.0 | - | 99 | 0 | 100 | 41 | 95 |
| 0.25 | - | 0 | 0 | 36 | 1 | 3 |
| 0.063 | - | 0 | 0 | 0 | 0 | 0 |
| 1.0 | 1.0 | 100 | 66 | 100 | - | 100 |
| 0.25 | 1.0 | 100 | 21 | 100 | - | 100 |
| 0.063 | 1.0 | 100 | 0 | 100 | 67 | 95 |
| 1.0 | 0.25 | 100 | 57 | 100 | - | 100 |
| 0.25 | 0.25 | 100 | 0 | 100 | 100 | 100 |
| 0.063 | 0.25 | 100 | 0 | 100 | 81 | 95 |
| 1.0 | 0.063 | 100 | 57 | 100 | 100 | 100 |
| 0.25 | 0.063 | 100 | 0 | 100 | - | 100 |
| 0.063 | 0.063 | 88 | 0 | 100 | 45 | - |
| --- | - | 7 | 0 | 0 | 0 | 0 |
| --- | 1.0 | 0 | 0 | 0 | 0 | 0 |
| --- | 0.25 | 15 | 0 | 0 | 0 | 0 |
| --- | 0.063 | 0 | 0 | - | - | - |

Bean plants were challenged with mixed mite population seven days after treatment.

Example 5

Effects of Avermectin B1a/B1b, and Agricultural Spray Oil on the Citrus Red Mite on Lemon Trees

Lemon trees with an ongoing population of citrus red mites were sprayed once with 8 ppm of avermectin B1a/B1b, agricultural spray oil and a combination thereof. The agricultural spray oil was applied at a rate of 3 pints per 100 gallons of spray (.375%). The data is summarized in Table VII.

TABLE VII

CITRUS RED MITE, *Panonychus citri* on Lemon plants.

| Material & Rate | No. Mites per 32 Leaves | | | | | |
|---|---|---|---|---|---|---|
| | Days Before or After Spraying | | | | | |
| | -5 | +7 | +16 | +30 | +50 | +70 |
| Avermectin Bla/Blb, 8 ppm | 26.7 | 0 | 0.3 | 24.7 | 15.0 | 18.3 |
| Avermectin Bla/Blb, 8 ppm + Agricultural Spray Oil* | 33.3 | 0 | 0 | 3.0 | 1.3 | 2.7 |
| NR-415 Agricultural Spray Oil* | 35 | 0 | 1.6 | 11.3 | 15.7 | 36.7 |
| Water (Control) | 11.3 | 11.7 | 31 | 81.7 | 58.3 | 26.7 |

*3 pints per 100 gallons (0.375%)

Example 6

Effects of Avermectins and Agricultural Spray Oils on Bean Aphids

Bean plants infested with the Bean aphids were treated with avermectin B1a/B1b, agricultural spray oil and mixtures thereof and the results analyzed 1 and 5 days after treatment. The results are summarized in Tables VIII and IX, and demonstrate that the oil has very little effect alone, and together the treatment is greatly and synergistically improved.

TABLE VIII

THE EFFECT OF AGRICULTURAL SPRAY OIL ON THE INSECTICIDAL EFFICACY OF AVERMECTIN B1a/B1b

Bean Aphid on Bean Plants

| % Emulsifiable Oil | Concentration (PPM) of avermectin B1a/B1b | % Mortality[1/] Day 1 | % Mortality[1/] Day 5 |
|---|---|---|---|
| .25 | .5 | 0 | 90 |
| | .25 | 5 | 80 |
| | .125 | 0 | 85 |
| | .063 | 0 | 80 |
| | 0 | 0 | 5 |
| .063 | .5 | 25 | 50 |
| | .25 | 30 | 50 |
| | .125 | 10 | 60 |
| | .063 | 15 | 55 |
| | 0 | 5 | 0 |
| 0 | 1.0 | 30 | 35 |
| | 0.5 | 20 | 25 |
| | 0.25 | 25 | 0 |
| | 0.125 | 10 | 0 |
| | 0 | 0 | 0 |

1/ All values are means of 2 replicates

TABLE IX

Influence of an agricultural spray oil on the efficacy of avermectin B1a/B1b used against the bean aphid

| Percent Oil | avermectin B1a/B1b (ppm) | Percent Control[a] |
|---|---|---|
| 0.25 | 0.5 | 87 |
| | 0.125 | 53 |
| | 0.031 | 17 |
| | 0.0078 | 0 |
| | 0 | 0 |
| 0.125 | 0.5 | 80 |
| | 0.125 | 33 |
| | 0.031 | 0 |
| | 0.0078 | 0 |
| | 0 | 0 |
| 0.063 | 0.5 | 73 |
| | 0.125 | 30 |
| | 0.031 | 0 |
| | 0.0078 | 0 |
| | 0 | 0 |
| 0 | 0.5 | 47 |
| | 0.125 | 3 |
| | 0.031 | 0 |
| | 0.0078 | 0 |
| | 0 | 0 |

[a] Mean of three replicates

Example 7

Preparation of an Aqueous Plant Spray Containing Avermectin B1a/B1b and an Agricultural Spray oil

For evaluation of synergistic activity in the laboratory, a 90% oil emulsion was formulated by adding 1 gram of Agrimul 26-B emulsifier to 9 grams of Sunspray 6N 60 sec spray oil. This oil emulsion was treated as a pure (100%) oil and added to solutions of avermectin B1a/B1b to prepare known concentrations of the avermectins and oil as shown in the foregoing examples.

For dilute spray applications under field conditions, 0.04 oz (1.134 g) of avermectin B1a/B1b formulated as 0.03 lb per gallon (3.6 g/L) soluble liquid was poured into 100 gallons (379 L) of water. To this resulting solution was added with agitation 1 quart (0.95 L) of agricultural spray oil to provide an emulsion containing 0.04 oz (1.134 g) avermectin B1a/B1b (3 ppm) and 0.25% oil in 100 gallons (379 L) of water.

**Claims**

1. A formulation containing a synergistic combination useful against motile stages of arthropods infecting plants that comprises one or more avermectin compounds having the formula:

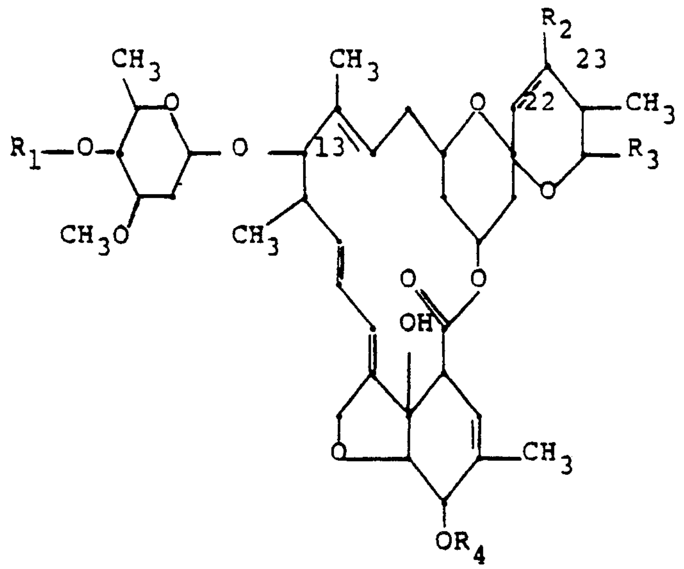

where the broken line indicates either a single or a double bond at the 22,23-position;

$R_1$ is hydrogen or

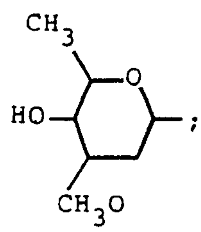

$R_2$ is hydrogen or hydroxy, provided that $R_2$ is present only when the broken line indicates a single bond;

$R_3$ is sec-butyl or isopropyl; and

$R_4$ is hydrogen or methyl,

and 0.03 to 0.5% v/v, based on the total formulation, of an agricultural spray oil that is a highly refined hydrocarbon oil containing at least 92% unsulfonated residues or is a vegetable seed oil or mixture thereof.

2. A formulation as claimed in Claim 1 in which the amount of avermectin compound or compounds is 0.03 to 8 ppm, based on the total formulation.

3. A formulation as claimed in Claim 2 in which the amount of avermectin compound or compounds is 0.25 to 3 ppm and the amount of agricultural spray oil is 0.06 to 0.5% v/v, both based on the total formulation.

4. A formulation as claimed in Claim 3 in which the amount of avermectin compound or compounds is 1 to 3 ppm and the amount of agricultural spray oil is about 0.25% v/v, both based on the total formulation.

5. A formulation for use against the motile stages of mites and insect pests of plants comprising an inert carrier, a compound having the formula set forth in Claim 1, and 0.03 to 0.5% v/v, based on the total formulation, of an agricultural spray oil that is a highly refined hydrocarbon oil containing at least 92% unsulfonated residues or is a vegetable seed oil or mixture thereof.

6. A formulation as claimed in Claim 5 in which the amount of avermectin compound or compounds and the amount of agricultural spray oil are as defined in Claim 2, 3 or 4.

7. A formulation as claimed in Claim 5 or 6 that also includes an anionic and/or a non-ionic surfactant.

8. A method of killing or inhibiting the motile stages of arthropod pests of plants, comprising applying to them a formulation as claimed in Claim 1.

9. A method of killing or inhibiting the motile stages of arthropod pests of plants, comprising applying to them a formulation as claimed in any one of Claims 2 to 7.

**Patentansprüche**

1. Eine Formulierung, enthaltend eine synergistische Kombination, die gegen frei bewegliche Stadien von Pflanzen befallenden Gliederfüßern nützlich ist, umfassend eine oder mehrere Avermectinverbindungen der Formel:

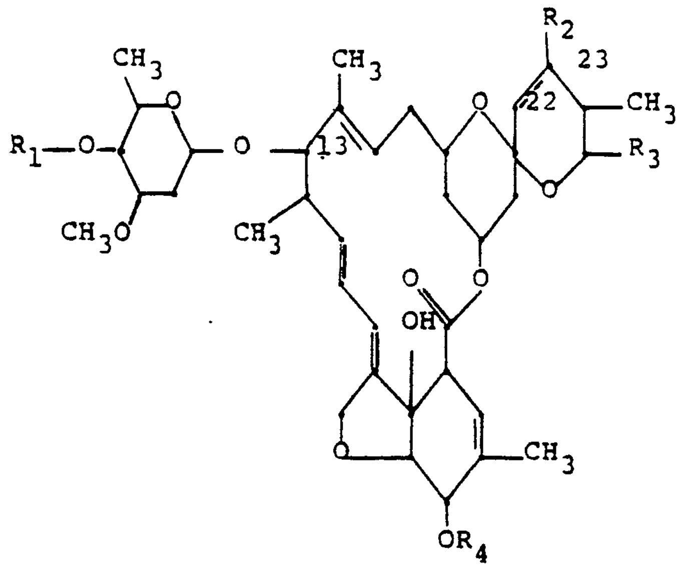

worin die strichlierte Linie entweder eine Einfach- oder eine Doppelbindung in der 22,23-Stellung angibt;

$R_1$ Wasserstoff oder

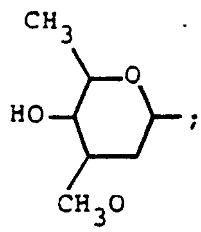

ist;

$R_2$ Wasserstoff oder Hydroxy ist, mit der Maßgabe, daß $R_2$ nur dann vorliegt, wenn die strichlierte Linie eine Einfachbindung anzeigt;

$R_3$ sek.Butyl oder Isopropyl ist; und

$R_4$ Wasserstoff oder Methyl ist;

und 0,03 bis 0,5% (Vol./Vol.), bezogen auf die gesamte Formulierung, eines Sprühöls für landwirtschaftliche Zwecke, das ein hoch raffiniertes Kohlenwasserstofföl mit einem Gehalt von wenigstens 92% unsulfonierten Rückständen oder ein Pflanzensamenöl bzw. ein Gemisch davon ist.

2. Eine Formulierung wie in Anspruch 1 beansprucht, wobei die Menge der Avermectinverbindung oder -verbindungen 0,03 bis 8 ppm, bezogen auf die gesamte Formulierung, beträgt.

3. Eine Formulierung wie in Anspruch 2 beansprucht, wobei die Menge der Avermectinverbindung oder -verbindungen 0,25 bis 3 ppm, und die Menge an Sprühöl für landwirtschaftliche Zwecke 0,06 bis 0,5% (Vol./Vol.), beide Angaben auf die gesamte Formulierung bezogen, betragen.

4. Eine Formulierung wie in Anspruch 3 beansprucht, wobei die Menge an Avermectinverbindung oder -verbindungen 1 bis 3 ppm, und die Menge an Sprühöl für landwirtschaftliche Zwecke etwa 0,25% (Vol./Vol.), beide Angaben bezogen auf die gesamte Formulierung, betragen.

5. Eine Formulierung zur Verwendung gegen die frei beweglichen Stadien von Pflanzenmilben und schädlichen Pflanzeninsekten, umfassend einen inerten Träger, eine Verbindung der in Anspruch 1 angegebenen Formel, und 0,03 bis 0,5% (Vol./Vol.), bezogen auf die gesamte Formulierung, eines Sprühöls für landwirtschaftliche Zwecke, das ein hoch raffiniertes Kohlenwasserstofföl, enthaltend wenigstens 92% unsulfonierte Rückstände, oder ein Pflanzensamenöl bzw. ein Gemisch davon ist.

6. Eine Formulierung wie in Anspruch 5 beansprucht, wobei die Menge an Avermectinverbindung oder -verbindungen und die Menge an Sprühöl für landwirtschaftliche Zwecke wie in einem der Ansprüche 2, 3 oder 4 definiert sind.

7. Eine Formulierung wie in Anspruch 5 oder 6 beansprucht, die auch ein anionisches und/oder ein nichtionisches grenzflächenaktives Mittel enthält.

8. Ein Verfahren zur Abtötung oder Hemmung der frei beweglichen Stadien von Gliederfüßerschädlingen von Pflanzen, umfassend das Aufbringen einer Formulierung, wie sie in Anspruch 1 beansprucht ist, auf diese Pflanzen.

9. Ein Verfahren zur Abtötung oder Hemmung der frei beweglichen Stadien von Gliederfüßerschädlingen von Pflanzen, umfassend das Aufbringen einer Formulierung, wie sie in einem der Anspruch 2 bis 7 beansprucht ist, auf diese Pflanzen.

**Revendications**

1. Formulation contenant une association synergique utile contre les stades mobiles d'arthropodes infestant les plantes, qui comprend

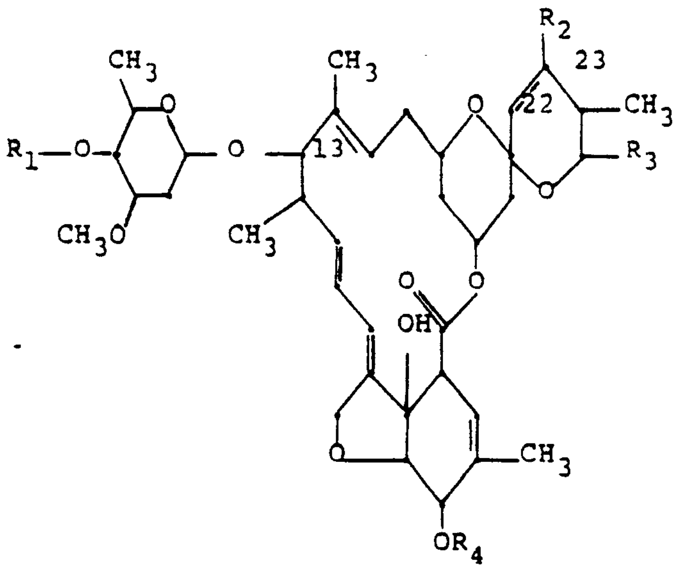

où la ligne en traits interrompus indique une double ou une simple liaison en position 22, 23;

$R_1$ est un hydrogène ou

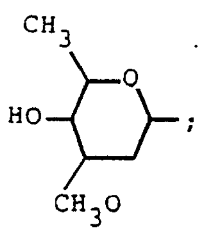

$R_2$ est un hydrogène ou un hydroxy, à condition que $R_2$ ne soit présent que lorsque la ligne en traits interrompus indique une simple liaison;

$R_3$ est un sec-butyle ou un isopropyle; et

$R_4$ est un hydrogène ou un méthyle,

et 0,03 à 0,5% v/v, basés sur la formulation totale, d'une huile pour pulvérisation agricole qui est une huile d'hydrocarbure hautement raffinée contenant au moins 92% de résidus non sulfonés ou qui est une huile végétale ou leur mélange.

2. Formulation selon la Revendication 1, caractérisée en ce que la quantité du composé ou des composés d'avermectine est de 0,03 à 8 ppm, basée sur la formulation totale.

3. Formulation selon la Revendication 2, caractérisée en ce que la quantité du composé ou des composés d'avermectine est de 0,25 à 3 ppm et la quantité d'huile pour pulvérisation agricole est de 0,06 à 0,5%, v/v, les deux basées sur la formulation totale.

4. Formulation selon la Revendication 3, caractérisée en ce que la quantité du composé ou des composés d'avermectine est de 1 à 3 ppm et la quantité d'huile pour pulvérisation agricole est de 0,25%, v/v, les deux basées sur la formulation totale.

5. Formulation pour l'emploi contre les stades mobiles d'acariens et des insectes parasites des plantes, comprenant un porteur inerte, un composé ayant la formule présentée dans la Revendication 1, et 0,03 à 0,5%, v/v, basés sur la formulation totale, d'une huile pour pulvéisation agricole qui est une huile d'hydrocarbure hautement raffinée contentant au moins 92% de de résidus non sulfonés ou qui est une huile végétale ou leur mélange.

6. Formulation selon la Revendication 5, caractérisée en ce que la quantité du composé ou des composés d'avermectine et la quantité d'huile pour pulvérisation agricole sont telles qu'elles sont définies dans les Revendications 2, 3 ou 4.

7. Formulation selon la Revendication 5 ou 6 qui comprend également un tensio-actif anionique et/ou non ionique.

8. Méthode pour tuer ou inhiber les stades mobiles d'arthropodes parasites des plantes, comprenant l'application sur ces plantes d'une formulation telle qu'elle est revendiquée dans la Revendication 1.

9. Méthode pour tuer ou inhiber les stades mobiles d'arthropodes parasites des plantes, comprenant l'application sur ces plantes d'une formulation telle qu'elle est revendiquée dans l'une quelconque des Revendications 2 à 7.